# FASCICULE DE BREVET EUROPEEN

(11) **EP 4 396 494 B1**
(45) Date de publication et mention de la délivrance du brevet: **23.07.2025**
(21) Numéro de dépôt: 22754448.3
(22) Date de dépôt: 02.08.2022
(51) Int. Cl.: F21S 43/14, F21S 43/15, F21S 43/239, F21S 43/241, F21S 43/243, F21S 43/245, F21S 43/247, F21S 43/249, B60Q 3/64, B60Q 3/74, F21V 8/00

(54) **GUIDE DE LUMIERE POUR ECLAIRAGE D'HABITACLE D'UN VEHICULE AUTOMOBILE**
LICHTLEITER ZUR FAHRZEUG-INNENRAUM-BELEUCHTUNG
LIGHT GUIDE FOR ILLUMINATING A VEHICLE INTERIOR COMPARTMENT

(30) Priorité: 02.09.2021 FR 2109195
(43) Date de publication de la demande: 10.07.2024
(73) Titulaire: VALEO VISION, 93012 Bobigny Cedex (FR)
(72) Inventeur: TASSY, Pierre-Louis, 93012 Bobigny Cedex (FR)
(74) Mandataire: Valeo Visibility
(86) Numéro de dépôt international: PCT/EP2022/071606
(87) Numéro de publication internationale: WO 2023/030800

(56) Documents cités:
- EP-A1- 3 872 394
- EP-A2- 2 354 637
- WO-A1-2020/043443
- WO-A1-2021/136235
- DE-A1- 102011 016 433
- FR-A1- 2 939 868
- JP-A- 2009 048 939
- JP-A- 2011 076 858
- JP-A- 2014 127 413
- JP-A- 2018 120 683

## Description

La présente invention concerne le domaine de l'éclairage d'un habitacle de véhicule automobile, comme connu des documents JP 2011-076858 A, JP 2018-120683 A et JP 2009-048939 A.

Un tel éclairage intérieur peut être assuré par des guides de lumière, qui sont des pièces à l'intérieur desquelles des rayons lumineux se déplacent de façon contrôlée, depuis une face d'entrée à proximité de laquelle sont disposées une source lumineuse jusqu'à une face de sortie d'où les rayons lumineux émergent. Au sein du guide de lumière, la propagation des rayons lumineux est contrôlée notamment par des réflexions internes sur différentes faces de ce guide de lumière.

Les guides de lumière peuvent prendre des formes géométriques variées, répondant ainsi à diverses exigences esthétiques. Les guides de lumières permettent par exemple d'éclairer des zones difficilement accessibles de l'habitacle du véhicule.

Les sources lumineuses sont généralement disposées sur une carte de circuit imprimé, formant ainsi une source de lumière linéaire et ponctuelle. Il est toutefois difficile d'obtenir, à partir de cette source de lumière linéaire et ponctuelle, un éclairage dynamique ou évolutif. En effet, la lumière émanant d'une source lumineuse donnée peut interférer avec la lumière émanant de la source lumineuse voisine. Le guide de lumière présentant une surface à éclairer importante, de telles interférences nuisent aux performances de l'éclairage dynamique ou évolutif, par exemple en le rendant moins net au fur et à mesure de son éloignement des sources lumineuses, ou encore en créant des zones où l'intensité de cet éclairage est moindre, voire où l'éclairage est absent.

Une solution visée par l'invention pour contourner ces difficultés techniques est d'aménager des cavités au sein du guide de lumière, et plus spécifiquement des fentes et des rainures. La présence de telles cavités permet d'obtenir un éclairage plus homogène sur l'intégralité de la face de sortie et participe à éviter la propagation de la lumière depuis des faces du guide de lumière autres que cette face de sortie. Le couple formé par une fente et par une rainure a pour objet essentiel de canaliser la lumière émise par une source majoritairement vers une seule surface de sortie. Une fente et une rainure se distingue l'une de l'autre notamment en ce que la fente est traversante, c'est-à-dire qu'elle traverse le guide de lumière de part en part, tandis que la rainure est borgne et n'est donc ouverte que sur une seule face de sortie de ce guide de lumière.

La présente invention a ainsi pour principal objet un guide de lumière pour éclairage d'un habitacle d'un véhicule automobile comprenant une portion d'entrée de lumière et une portion de sortie de lumière, la portion d'entrée de lumière comprenant au moins deux faces d'entrée de lumière et la portion de sortie de lumière comprenant au moins deux faces de sortie de lumière. Selon l'invention, la portion d'entrée de lumière présente au moins une fente disposée entre deux faces d'entrée de lumière et une rainure séparant deux faces de sortie de lumière s'étendant dans un prolongement de cette fente.

Un tel guide de lumière possède donc une portion d'entrée de lumière par laquelle des rayons lumineux pénètrent dans le guide de lumière et une portion de sortie de lumière par laquelle ils en sortent, la portion de sortie de lumière étant disposée dans la continuité de la portion d'entrée de lumière. Plus précisément, ces rayons lumineux entrent dans le guide de lumière par au moins deux faces d'entrée de lumière de la portion d'entrée de lumière et en ressortent par au moins deux faces de sortie de lumière de la portion de sortie de lumière. Au sein de la portion d'entrée de lumière, deux faces d'entrée de lumière adjacentes sont séparées par une fente. De la même façon, au sein de la portion de sortie de lumière deux faces de sortie de lumière adjacentes sont séparées par une rainure, cette rainure s'étendant dans le prolongement de la fente.

La présence de fentes et de rainures crée des lames d'air au sein de la surface du guide de lumière, qui évitent les fuites de rayons lumineux, de manière à les propager sur l'intégralité de la portion de sortie et plus particulièrement sur des régions de la portion de sortie qui sont les plus éloignées de la portion d'entrée. Une telle configuration permet de contenir les rayons lumineux dans une portion spécifique du guide de lumière, ici une bande.

Selon une caractéristique préférée, la portion d'entrée de lumière et la portion de sortie de lumière s'étendent dans des plans sécants. On comprend que si la portion de sortie de lumière présente une surface courbée, tous les plans dans lesquels s'étendent des tangentes à la surface courbée de cette portion de sortie de lumière sont sécants au plan de la portion d'entrée de lumière, indifféremment du fait qu'une telle courbure de la surface de la portion de sortie de lumière soit appréciée selon une direction longitudinale ou une direction verticale du guide de lumière.

Selon une caractéristique préférée, le guide de lumière comprend une succession de bandes, chaque bande étant délimitée par une face d'entrée de lumière et au moins une face de sortie de lumière.

Le guide de lumière est ainsi formé de bandes alignées selon une direction principale d'allongement du guide de lumière qui correspond à sa direction longitudinale. Chaque bande est délimitée, à une première extrémité au voisinage de la portion d'entrée de lumière, par une face d'entrée de lumière, et à une deuxième extrémité au voisinage de la portion de sortie de lumière, par au moins une face de sortie de lumière.

Selon une autre caractéristique préférée, au moins une bande s'évase de la face d'entrée de lumière vers la face de sortie de lumière.

La plupart des bandes formant le guide de lumière sont sensiblement trapézoïdales, ces bandes présentant une forme évasée, telle qu'évoquée ci-dessus. On comprend qu'elles présentent donc des dimensions, mesurées dans la direction longitudinale du guide de lumière, plus étroites au niveau de leur face d'entrée de lumière, et des dimensions plus larges au niveau de leur face de sortie de lumière, également mesurées dans la direction longitudinale du guide de lumière. Par ailleurs, les bandes ne sont pas nécessairement d'épaisseurs constantes. Le guide de lumière peut également être composé de bandes dont les extrémités selon la direction longitudinale sont légèrement courbées.

Selon une caractéristique préférée, le guide de lumière comprend une portion coudée entre la portion d'entrée de lumière et la portion de sortie de lumière.

Cette portion coudée fait la liaison entre la portion d'entrée de lumière et la portion de sortie de lumière, qui sont donc disposées dans des plans sécants. Du fait de cette portion coudée, et plus particulièrement si celle-ci forme un angle droit, la face d'entrée de lumière et la face de sortie de lumière sont sensiblement parallèles.

Selon une autre caractéristique préférée, le guide de lumière comprend une pluralité de fentes, chacune disposée entre deux faces d'entrée de lumière, ces fentes étant disposées à intervalles réguliers selon une direction principale d'allongement du guide de lumière.

On comprend que selon la direction principale d'allongement du guide de lumière, c'est-à-dire le long de sa dimension longitudinale, des fentes sont disposées régulièrement sur le guide de lumière. Ces fentes sont disposées entre deux faces d'entrée de lumière, chaque face d'entrée de lumière correspondant à une bande du guide de lumière.

Selon une caractéristique préférée, le guide de lumière comprend une pluralité de rainures, chacune disposée entre deux faces de sortie de lumière, au moins plusieurs de ces rainures étant disposées à intervalles réguliers selon la direction principale d'allongement du guide de lumière.

Similairement aux fentes, les rainures sont disposées régulièrement sur le guide de lumière, sur toute sa dimension longitudinale. Ces rainures séparent deux faces de sortie de lumière adjacentes et participent donc à la délimitation des bandes du guide de lumière.

Selon une caractéristique préférée, au moins une fente traverse la portion d'entrée de lumière depuis une face supérieure de la portion d'entrée de lumière jusqu'à une face inférieure de la portion d'entrée de lumière, ces faces supérieure et inférieure étant jointes par la face d'entrée de lumière.

Ainsi, au moins une fente traverse la portion d'entrée de lumière de part en part, soit depuis une face supérieure de la portion d'entrée de lumière jusqu'à une face inférieure de la portion d'entrée de lumière. On comprend qu'en présence d'une pluralité de fentes, cette caractéristique peut s'appliquer à l'ensemble de ces fentes.

Selon une autre caractéristique préférée, les rainures s'étendent sur au moins un tiers d'une épaisseur de la portion de sortie de lumière, cette épaisseur étant mesurée entre la face de sortie de lumière et une face de réflexion de la portion de sortie de lumière opposée à cette face de sortie de lumière.

Les rainures correspondent donc à une dépression au sein de la portion de sortie de lumière, cette dépression correspondant au moins à un tiers de l'épaisseur de la portion de sortie de lumière. En d'autres termes, les rainures ont une profondeur correspondant à au moins un tiers de l'épaisseur de la portion de sortie de lumière. Cette portion de sortie de lumière est délimitée par la face de sortie de lumière à l'une de ses extrémités, et par la face de réflexion à l'autre de ses extrémités.

Selon une caractéristique préférée, les fentes et les rainures délimitent les bandes, au moins deux bandes adjacentes étant jointes par au plus un tiers de l'épaisseur de la portion de sortie de lumière.

On comprend donc qu'il existe une complémentarité entre la profondeur des rainures et l'épaisseur de portion de sortie de lumière qui relie deux bandes du guide de lumière.

Une telle épaisseur de la portion de sortie de lumière qui relie deux bandes peut par exemple être de trois millimètres.

Selon une caractéristique préférée, le guide de lumière présente une zone dépourvue de rainures qui s'étend dans un prolongement de la portion de sortie de lumière.

Selon l'invention (revendication 1), au sein de la portion d'entrée de lumière la face d'entrée de lumière joint une face supérieure et une face inférieure, cette face supérieure de la portion d'entrée de lumière présentant un moyen de mixage configuré pour mélanger des rayons lumineux entrant par la face d'entrée de lumière.

On comprend que les faces supérieure et inférieure dont il est question ici correspondent aux faces supérieure et inférieure entre lesquelles s'étendent les fentes.

Lorsque les rayons lumineux sont issus de sources de lumières qui sont composées de diodes électroluminescentes de couleurs différentes, ces couleurs nécessitent une certaine distance au sein du guide de lumière pour pouvoir se mélanger, pour donner d'autres couleurs et particulièrement une couleur blanche. Un tel moyen de mixage permet d'améliorer ce mélange des rayons lumineux dans un encombrement réduit.

Selon l'invention (revendication 1), le moyen de mixage comprend une succession de bandeaux concaves ou convexes, vus de l'extérieur du guide de lumière, alignés à partir de la face d'entrée de lumière.

Cette forme particulière des bandeaux aide à améliorer l'homogénéité des rayons lumineux en dépit d'une courte distance de propagation. Ce sont donc des artifices permettant de réduire la distance nécessaire au mélange des couleurs, en fragmentant les modes de propagation. L'encombrement du guide de lumière dans sa globalité est ainsi réduit, ce qui facilite son implantation dans un véhicule.

Selon une caractéristique préférée, la face de sortie de lumière est opposée à une face de réflexion, cette face de réflexion comprenant une structure de découplage.

On comprend que cette face de réflexion est la même que celle qui permet de délimiter l'épaisseur de la portion de sortie de lumière. Une telle structure de découplage est un dispositif qui modifie l'angle d'incidence des rayons lumineux, ce qui a pour effet de les diriger vers un endroit déterminé, ici vers la face de sortie de lumière. La structure de découplage permet en outre un éclairage homogène de la portion de sortie de lumière indépendamment de l'éloignement de la portion d'entrée de lumière, une telle homogénéité étant obtenue en faisant varier la géométrie de la structure de découplage.

Selon une caractéristique préférée, la structure de découplage comprend au moins une pluralité de prismes et/ou une pluralité de sphères et/ou un grainage et/ou une structure diffractive et/ou de la peinture blanche.

Ces différents modes de réalisation de la structure de découplage peuvent être utilisés isolément ou complémentairement.

Selon une autre caractéristique préférée, la structure de découplage est répartie sur la face de réflexion selon une direction d'allongement de la bande et une direction perpendiculaire à cette direction d'allongement.

La structure de découplage est répartie sur la face de réflexion en différentes zones de cette face de réflexion, chaque zone correspondant à une position et une orientation particulières de la structure de découplage. Par exemple, si la structure de découplage comprend des prismes, ces prismes seront répartis sur la face de réflexion selon plusieurs zones. Les prismes d'une même zone auront une orientation particulière, qui correspondra à une direction d'allongement de la bande et à une direction perpendiculaire à cette direction d'allongement.

Selon une caractéristique préférée, le guide de lumière est réalisé en un matériau configuré pour conduire les rayons lumineux par transmission interne au guide de lumière.

On comprend ainsi que le matériau en lequel est réalisé le guide de lumière est un matériau transparent ou translucide. Un tel matériau peut notamment être du plexiglas ou du polycarbonate.

L'invention concerne en outre un dispositif d'éclairage comprenant une carte de circuit imprimé qui porte une pluralité de sources de lumière, chacune des faces d'entrée de lumière d'un guide de lumière tel que décrit précédemment étant disposée en regard d'au moins une source de lumière.

Une telle disposition des sources de lumière permet aux rayons lumineux émis par ces sources de lumières de pénétrer dans le guide de lumière par ses faces d'entrée de lumière. Un rayon de lumière émis par une source de lumière donnée entre dans le guide de lumière par l'une des faces d'entrée de lumière et sort de ce guide de lumière par une face de sortie de lumière qui lui est associée.

Selon une caractéristique préférée, au moins une des sources de lumière comprend des diodes électroluminescentes RVB.

Ces diodes électroluminescentes RVB sont un assemblage de diodes monochromes, capables de produire des rayons lumineux d'une unique couleur, notamment le rouge, le vert et le bleu. Ces couleurs peuvent être mélangées pour former d'autres couleurs et notamment des rayons lumineux blancs.

L'invention concerne par ailleurs un panneau d'un intérieur de véhicule automobile comprenant un support et un enjoliveur, un dispositif d'éclairage tel que décrit précédemment étant disposé entre ce support et cet enjoliveur, la portion de sortie du guide de lumière étant disposée en regard de l'enjoliveur.

Ainsi, le dispositif d'éclairage est disposé entre d'une part le support du panneau, et d'autre part l'enjoliveur. La portion de sortie du guide de lumière, qui est celle par laquelle les rayons lumineux sortent du guide de lumière, est recouverte par l'enjoliveur.

Selon une caractéristique préférée, l'enjoliveur présente au moins un motif rendu visible par l'allumage d'au moins une des sources de lumière.

On comprend ainsi que l'allumage d'au moins une source de lumière émet des rayons lumineux qui rendent visible le motif au travers de l'enjoliveur.

D'autres caractéristiques, détails et avantages de l'invention ressortiront plus clairement à la lecture de la description qui suit d'une part, et d'exemples de réalisation donnés à titre indicatif et non limitatif en référence aux dessins annexés d'autre part, sur lesquels :
[Fig.1] illustre, schématiquement, une vue de face d'un guide de lumière selon l'invention ;
[Fig.2] est une vue en perspective du guide de lumière de la [Fig.1] ;
[Fig.3] illustre, schématiquement, une vue arrière du guide de lumière de la [Fig.1] ;
[Fig.4] est une vue en perspective d'un dispositif d'éclairage comprenant le guide de lumière de la [Fig.1] ;
[Fig.5] illustre, schématiquement, le dispositif d'éclairage de la [Fig.4] selon une vue de dessous ;
[Fig.6] est une vue en perspective d'un panneau d'un intérieur de véhicule automobile, comprenant le dispositif d'éclairage de la [Fig.4].

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

Sur les figures, les éléments communs à plusieurs figures conservent la même référence.

Dans la description détaillée qui va suivre, les dénominations « longitudinale », « transversale » et « verticale » se réfèrent à l'orientation d'un guide de lumière selon l'invention. Une direction longitudinale correspond à une direction principale d'allongement du guide de lumière, cette direction longitudinale étant parallèle à un axe longitudinal L d'un repère L, V, T illustré sur les figures. Une direction transversale correspond à la direction d'alignement d'une face d'entrée de lumière et d'une face de sortie de lumière, cette direction transversale étant parallèle à un axe transversal T du repère L, V, T et cet axe transversal T étant perpendiculaire à l'axe longitudinal L. Enfin, une direction verticale correspond à une direction parallèle à un axe vertical V du repère L, V, T, cet axe vertical V étant perpendiculaire à l'axe longitudinal L et à l'axe transversal T.

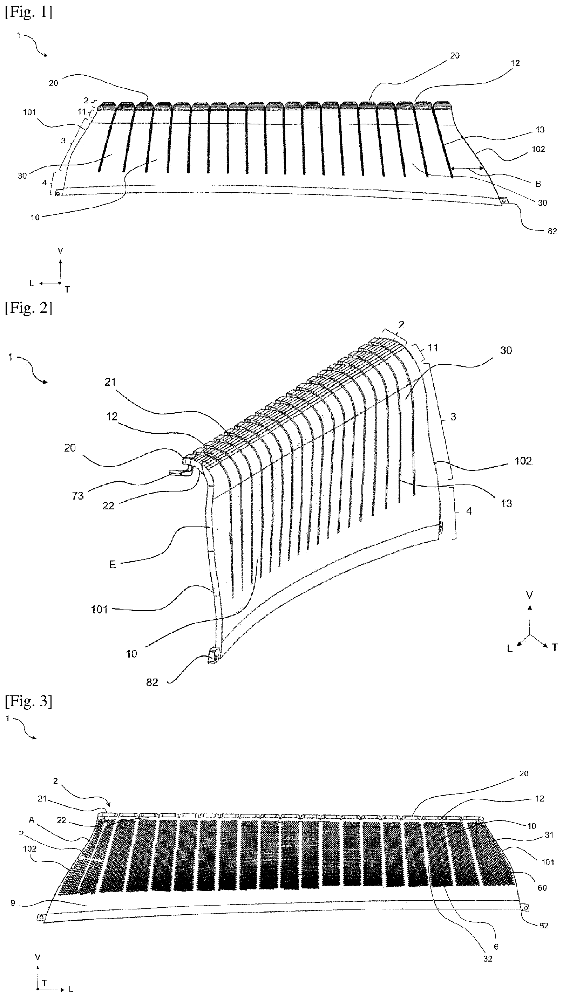

Les figures 1 et 2 sont, respectivement, une vue de face et une vue en perspective d'un guide de lumière 1 selon l'invention. Ce guide de lumière 1 est configuré pour éclairer un habitacle d'un véhicule automobile, un tel éclairage étant de préférence dynamique ou évolutif. Le guide de lumière 1 est réalisé en un matériau configuré pour conduire les rayons lumineux par transmission interne à ce guide de lumière 1. Un tel matériau, transparent ou translucide, peut par exemple être du plexiglas ou du polycarbonate. Le guide de lumière 1 s'étend principalement selon une direction longitudinale et il présente, en vue de face telle que celle visible en [Fig.1], sensiblement une forme de trapèze.

Le guide de lumière 1 comporte une portion d'entrée de lumière 2 et une portion de sortie de lumière 3, cette portion de sortie de lumière 3 étant dans le prolongement de la portion d'entrée de lumière 2. La portion d'entrée de lumière 2 et la portion de sortie de lumière 3 sont reliées par une portion coudée 11 et sont donc ici disposées dans des plans sécants.

La portion de sortie de lumière 3 peut présenter une courbure, dans une direction longitudinale et/ou dans une direction verticale. On comprend que si la surface de la portion de sortie de lumière 3 n'est pas sensiblement plane mais présente une courbure, les plans dans lesquels s'étendent des tangentes à cette courbure seront sécants au plan dans lequel s'étend la portion d'entrée de lumière 2. Selon le mode de réalisation illustré sur les figures, la portion d'entrée de lumière 2 s'étend principalement dans un plan longitudinal/ et transversal, tandis que la portion de sortie de lumière 3 s'étend principalement dans un plan longitudinal/ vertical. Bien entendu, l'invention couvre le cas où la portion d'entrée de lumière 2 s'étend longitudinalement tout en s'inscrivant dans une courbe autour de la direction longitudinale L. De manière alternative ou complémentaire, la portion d'entrée de lumière 2 s'étend longitudinalement tout en s'inscrivant dans une courbe autour de la direction transversale T.

L'invention couvre le cas où la portion de sortie de lumière 3 s'étend longitudinalement tout en s'inscrivant dans une courbe autour de la direction longitudinale L. De manière alternative ou complémentaire, la portion de sortie de lumière 3 s'étend longitudinalement tout en s'inscrivant dans une courbe autour de la direction verticale V.

La portion de sortie de lumière 3 présente une surface importante qui est supérieure à la surface de la portion d'entrée de lumière 2. La portion de sortie de lumière 3 peut notamment présenter une dimension mesurée selon la direction transversale comprise entre 20 et 50 mm, tandis que la portion d'entrée de lumière 2 peut présenter une dimension mesurée selon la direction longitudinale comprise entre 30 et 500 mm.

La portion d'entrée de lumière 2 comprend une pluralité de faces d'entrée de lumière 20, qui sont les faces du guide de lumière 1 par lesquelles des rayons lumineux pénètrent au sein de ce guide de lumière 1. De la même façon, la portion de sortie de lumière 3 comporte une pluralité de faces de sortie de lumière 30, par lesquelles les rayons lumineux quittent le guide de lumière 1. Du fait de la portion coudée 11, les faces d'entrée de lumière 20 et les faces de sortie de lumière 30 sont, selon le mode de réalisation illustré sur les figures, sensiblement parallèles. Bien entendu, il ne s'agit que d'un exemple de réalisation, l'invention couvrant un cas où les faces d'entrée de lumière 20 et les faces de sortie de lumière 30 s'inscrivent dans des plans sécants, dans leur intégralité ou le long d'une tangente à ces faces.

Selon l'invention, la portion d'entrée de lumière 2 présente au moins une fente 12 disposée entre deux faces d'entrée de lumière 20 adjacentes. Une rainure 13 disposée entre deux faces de sortie de lumière 30 s'étend dans un prolongement de cette fente 12. Une telle rainure 13 s'étend à la fois sur la portion d'entrée de lumière 2, sur la portion coudée 11 et sur la portion de sortie de lumière 3.

Sur le mode de réalisation illustré sur les figures, le guide de lumière présente plusieurs fentes 12 et plusieurs rainures 13 dans le prolongement de celles-ci. On comprend ici que la rainure 13 s'étend le long d'une première droite, que la fente 12 s'étend le long d'une seconde droite, et que ces droites sont confondues. Plusieurs des fentes 12 et rainures 13 sont disposées à des intervalles réguliers d'une extrémité longitudinale 101 à l'autre extrémité longitudinale 102 du guide de lumière 1. Selon le mode de réalisation présenté sur les figures, les fentes 12 sont sensiblement en forme de triangles, les bases de ces triangles étant disposées au voisinage des faces d'entrée de lumière 20 tandis que les pointes des triangles sont dirigées vers les faces de sortie de lumière 30, en pointant sur la rainure 13 associée à la fente 12. Alternativement, le guide de lumière 1 pourrait présenter des fentes 12 en forme de cavité parabolique. Les rainures 13, dont une section prend une forme de U ou de V, s'étendent à partir des pointes de ces triangles formés par les fentes 12. Les rainures 13 ne s'étendent pas d'un bout à l'autre du guide de lumière 1 ; elles prennent naissance à l'une de leurs extrémités à la pointe des triangles formés par les fentes 12, soit à distance des faces de sortie de lumière 20, et à l'autre de leurs extrémités il existe une zone 4 dépourvue de rainures 13 qui est disposée dans le prolongement de la portion de sortie de lumière 3.

Le guide de lumière 1 se compose d'une succession de bandes 10, qui sont alignées selon la direction longitudinale. Chaque bande 10 est délimitée au moins par une face d'entrée de lumière 20 et par une face de sortie de lumière 30. Latéralement, ces bandes 10 sont délimitées par deux fentes 12 adjacentes dans la portion d'entrée de lumière 2 et par deux rainures 13 adjacentes dans la portion de sortie de lumière 3.

Les bandes 10 ne présentent pas toutes la même forme. La plupart des bandes 10 sont de forme sensiblement trapezoïdale en vue de face, une telle vue étant illustrée à la [Fig.1]. Ces deux bandes 10 sont évasées, c'est-à-dire que leur dimension longitudinale B est plus importante au voisinage de la face de sortie de lumière 30 qu'au voisinage de la face d'entrée de lumière 20, mesurée dans la direction longitudinale du guide de lumière 1. Une telle dimension longitudinale B, qui correspond à la largeur des bandes 10, est ici mesurée une fente 12 et une rainure 13 données et la fente 12 et la rainure 13 qui leur sont adjacentes ou l'une des extrémités longitudinales 101 ou 102. On comprend que la mesure sera calculée à partir d'une fente 12 si elle est effectuée dans la portion d'entrée de lumière 2, et à partir d'une rainure 13 si elle est effectuée dans la portion de sortie de lumière 3.

Les fentes 12 sont traversantes en ce sens qu'elles traversent la portion d'entrée de lumière 2 de part en part, c'est-à-dire depuis une face supérieure 21 de la portion d'entrée de lumière 2 jusqu'à une face inférieure 22 de la portion d'entrée de lumière 2, ces faces supérieure 21 et inférieure 22 étant jointes par les faces d'entrée de lumière 20. À l'inverse, les rainures 13 sont borgnes en ce sens qu'elles ne traversent pas la portion de sortie de lumière 3 de part en part.

Selon l'invention, ces rainures 13 s'étendent sur au moins un tiers d'une épaisseur E de la portion de sortie de lumière 3, cette épaisseur E étant mesurée entre les faces de sortie de lumière 30 et une face de réflexion 31 de la portion de sortie de lumière 3. Une telle face de réflexion 31 est opposée aux faces de sortie de lumière 3. Ainsi, au sein du guide de lumière 1 les faces de sortie de lumière 30 de la portion de sortie de lumière 3 sont dans le prolongement de la face supérieure 21 de la portion d'entrée de lumière 2, tandis que la face de réflexion 31 de la portion de sortie de lumière 3 est dans le prolongement de la face inférieure 22 de la portion d'entrée de lumière 2. La portion coudée 11 définit d'une part la transition de la face supérieure 21 en les faces de sortie de lumière 30, et d'autre part la transition de la face inférieure 22 en la face de réflexion 31.

Deux bandes 10 adjacentes sont jointes l'une à l'autre par au plus un tiers de l'épaisseur E de la portion de sortie de lumière 3. On comprend ainsi que cette section de la portion de sortie de lumière 3 qui relie les bandes 10 est complémentaire des rainures 13 qui participent à les délimiter.

La présence de fentes 12 et de rainures 13 permet de créer, au sein des portions d'entrée de lumière 2 et de sortie de lumière 3, des lames d'air qui canalisent les rayons lumineux issus d'une source de lumière 71 donnée, entrant dans le guide de lumière 1 par la face d'entrée de lumière 20 d'une bande 10, afin de les propager sur l'intégralité de la face de sortie 30 de cette même bande 10. Une telle configuration permet ainsi de contenir les rayons lumineux émis par une source de lumière 71 donnée au sein d'une bande 10 donnée.

La [Fig.3] est une vue de l'arrière du guide de lumière 1 selon l'invention, sur laquelle est visible une structure de découplage 6. Cette structure de découplage 6 est disposée sur la face de réflexion 31. On comprend ainsi qu'elle n'est pas présente sur la face inférieure 22 de la portion d'entrée de lumière 2. De la même façon, une région 9 disposée dans le prolongement de la face de réflexion 31 est dépourvue de structure de découplage 6. Enfin, des bandes verticales 32 de la face de réflexion 31, qui sont alignées sur les rainures 13 disposées entre les faces de sortie 30, sont elles aussi dépourvues de structure de découplage 6.

Cette structure de découplage 6 est un dispositif qui permet de modifier l'angle d'incidence des rayons lumineux qui se propagent au sein du guide de lumière 1. Lorsque ces rayons lumineux frappent la structure de découplage 6, ils sont déviés afin de pouvoir être redirigés vers les faces de sortie de lumière 30.

La configuration de structure de découplage 6 peut différer selon plusieurs modes de réalisation. Selon le mode de réalisation représenté ici, la structure de découplage comprend des prismes 60. Cette structure de découplage 6 peut toutefois comprendre, alternativement ou complémentairement, des sphères, un grainage, une structure diffractive, de la peinture blanche. Certains de ces éléments de la structure de découplage 6, et particulièrement les prismes 60 et/ou les sphères, peuvent être formés sur le guide de lumière 1 au moment du moulage de celui-ci, le moule utilisé présentant alors des dômes qui formeront des aspérités dans le guide de lumière 1, de telles aspérités correspondant à ces prismes 60 et/ou sphères. De la même façon, le grainage et la structure diffractive peuvent être obtenus par une gravure de forme complémentaire dans le moule.

La structure de découplage 6 est répartie sur la face de réflexion 31 selon une disposition particulière. Ainsi, les éléments formant cette structure de découplage 6, ici les prismes 60, sont répartis selon d'une part une direction d'allongement A des bandes 10, et d'autre part une direction perpendiculaire P à cette direction d'allongement A. On comprend donc que la répartition des éléments de la structure de découplage diffère d'une bande 10 à l'autre, mais également au sein de la même bande 10.

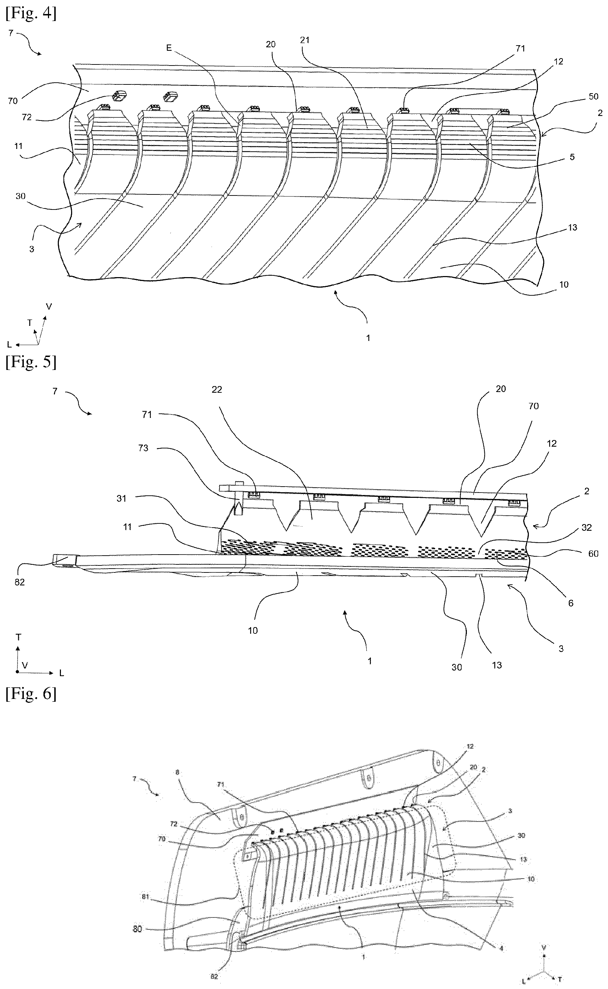

Les figures 4 et 5 représentent un dispositif d'éclairage 7 comprenant un guide de lumière 1 selon l'invention, ce dispositif d'éclairage 7 étant illustré selon des vues en perspective, respectivement une vue de dessus et une vue de dessous.

Ce dispositif d'éclairage comprend, en plus du guide de lumière 1, une carte de circuit imprimé 70. Cette carte de circuit imprimé 70 porte des sources de lumière 71, qui sont à l'origine des rayons lumineux qui se propagent au sein du guide de lumière 1. De telles sources de lumière 71 sont disposées à intervalles réguliers en regard des faces d'entrée de lumière 20 de la portion d'entrée de lumière 2, chaque source de lumière 71 correspondant à une face d'entrée de lumière 20. On comprend ainsi que la direction d'allongement A d'une bande 10 donnée, décrite précédemment en relation avec la [Fig.3], correspond à la direction moyenne du rayon lumineux émanant de la source lumineuse 71 disposée en regard de la face d'entrée de lumière 20 délimitant cette bande 10.

Le dispositif d'éclairage comprend en outre des organes de pilotage 72, au nombre de deux selon le mode de réalisation représenté ici. Les organes de pilotage 72 commandent les sources de lumière 71 et donc par extension l'éclairage du guide de lumière 1.

Les sources de lumière 71 comprennent chacune des diodes électroluminescentes RVB, de telles diodes permettant l'émission de rayons lumineux de couleurs rouge, verte et bleue. Il est toutefois possible d'éclairer le guide de lumière 1 en lumière blanche, en mélangeant les rayons lumineux issus de ces diodes électroluminescentes RVB. Une telle opération nécessite cependant une certaine distance de propagation des rayons lumineux, cette distance étant nécessaire au mélange des couleurs. À cet égard, le guide de lumière 1 présente, sur la face supérieure 21 de la portion d'entrée de lumière 2, un moyen de mixage 5. Ce moyen de mixage 5 est configuré pour mélanger les rayons lumineux émis par les sources de lumière 71 et entrant par les faces d'entrée de lumière 20.

Le moyen de mixage 5 comprend ici des bandeaux 50, qui sont alignés à partir de ces faces d'entrée de lumière 20, et s'étendent d'une extrémité latérale à l'autre des bandes 10. Ces bandeaux 50 ont une forme concave ou convexe lorsqu'ils sont vus de l'extérieur du guide de lumière 1, une telle forme permettant un mélange optimal des rayons lumineux au sein de la portion d'entrée de lumière 2.

Le guide de lumière 1 présente par ailleurs un pion de centrage 73 de la carte de circuit imprimé 70, un tel pion de centrage 73 faisant saillie de la face inférieure 22 de la portion d'entrée de lumière 2. Le pion de centrage 73 est, selon le mode de réalisation ici représenté, une tige courbée à angle droit, s'étendant selon une direction verticale pour une première partie de la tige et une selon une direction transversale pour une deuxième partie de la tige. Ce pion de centrage 73, particulièrement visible en [Fig.5], assure le bon positionnement de la carte de circuit imprimé 70 relativement au guide de lumière 1. À cet effet, le pion de centrage 73 s'insère dans un orifice correspondant traversant la carte de circuit imprimé 70 de part en part.

Le guide de lumière 1 selon l'invention est destiné à éclairer l'habitacle d'un véhicule automobile. À cet effet, le guide de lumière 1 peut être intégré dans un dispositif d'éclairage 7 tel que décrit précédemment, ce dispositif d'éclairage 7 pouvant lui-même être inséré dans un panneau 8 d'un intérieur de véhicule automobile. Un tel panneau 8 d'intérieur de véhicule est représenté en [Fig.6]. Ce panneau 8 peut être, par exemple, le panneau d'un ouvrant du véhicule ou le panneau d'une planche de bord du véhicule

Selon l'invention, le panneau 8 d'intérieur de véhicule comprend un support 80 et un enjoliveur 81, cet enjoliveur étant ici figuré en pointillés. Le guide de lumière 1 comprend des moyens de fixation 82 au support 80, qui sont constitués ici par des prolongements de la zone 4 aux extrémités de celle-ci. Ces moyens de fixation 82 s'étendent à partir du guide de lumière 1 selon la direction longitudinale. Les moyens de fixation 82, par exemple des pattes de fixation dotées d' œillets, permettent de faciliter l'arrimage du guide de lumière 1 au véhicule automobile qu'il est voué à équiper, et plus particulièrement au support 80 du panneau 8.

Le dispositif d'éclairage 7 est destiné à être disposé entre le support 80 et l'enjoliveur 81, les faces d'entrée de lumière 20 et la face de réflexion 31 étant en regard du support 80 tandis que les faces de sortie de lumière 30 sont en regard de l'enjoliveur 81. Plus particulièrement, la portion de sortie de lumière 3, les faces de sortie de lumière 30 et une partie de la zone 4 sont recouvertes par l'enjoliveur 81.

Cet enjoliveur 81 peut par exemple prendre la forme d'un empiècement en tissu ou en cuir, ces matières étant traitées de sorte à laisser passer les rayons lumineux. L'enjoliveur 81 comporte au moins un motif. Lors de l'allumage d'au moins une des sources de lumière 71, les rayons lumineux se propagent au sein du guide de lumière 1, le quittent par les faces de sortie de lumière 30 et traversent l'enjoliveur 81, rendant ainsi visible le motif.

La présente invention propose ainsi un guide de lumière offrant un éclairage homogène sur l'intégralité de la surface de ce guide de lumière destinée à évacuer les rayons lumineux, et participe par la même occasion à éviter la propagation de la lumière en dehors de cette surface.

## Revendications

1. Guide de lumière (1) pour éclairage d'un habitacle d'un véhicule automobile, comprenant une portion d'entrée de lumière (2) et une portion de sortie de lumière (3), la portion d'entrée de lumière (2) comprenant au moins deux faces d'entrée de lumière (20) et la portion de sortie de lumière (3) comprenant au moins deux faces de sortie de lumière (30), ce guide de lumière (1) étant tel que la portion d'entrée de lumière (2) présente au moins une fente (12) disposée entre deux faces d'entrée de lumière (20), **caractérisé en ce qu'** une rainure (13) séparant deux faces de sortie de lumière (30) s ' étend dans un prolongement de cette fente (12), et **en ce qu'**au sein de la portion d'entrée de lumière (2), la face d'entrée de lumière (20) joint une face supérieure (21) et une face inférieure (22), cette face supérieure (21) de la portion d'entrée de lumière (2) présentant un moyen de mixage (5) configuré pour mélanger des rayons lumineux entrant par la face d'entrée de lumière (2) et **en ce que** le moyen de mixage (5) comprend une succession de bandeaux (50) concaves ou convexes, vus de l'extérieur du guide de lumière (1), alignés à partir de la face d'entrée de lumière (2).

2. Guide de lumière (1) selon la revendication précédente, comprenant une succession de bandes (10), chaque bande (10) étant délimitée par une face d'entrée de lumière (20) et au moins une face de sortie de lumière (30).

3. Guide de lumière (1) selon la revendication précédente, dans lequel au moins une bande (10) s'évase de la face d'entrée de lumière (20) vers la face de sortie de lumière (30).

4. Guide de lumière (1) selon l'une quelconque des revendications précédentes, comprenant une portion coudée (11) entre la portion d'entrée de lumière (2) et la portion de sortie de lumière (3).

5. Guide de lumière (1) selon l'une quelconque des revendications précédentes, comprenant une pluralité de fentes (12), chacune disposée entre deux faces d'entrée de lumière (20), ces fentes (12) étant disposées à intervalles réguliers selon une direction principale d'allongement du guide de lumière (1).

6. Guide de lumière (1) selon la revendication 5, comprenant une pluralité de rainures (13), chacune disposée entre deux faces de sortie de lumière (30), au moins plusieurs de ces rainures (13) étant disposées à intervalles réguliers selon la direction principale d'allongement du guide de lumière (1).

7. Guide de lumière (1) selon l'une quelconque des revendications précédentes, dans lequel au moins une fente (12) traverse la portion d'entrée de lumière (2) depuis une face supérieure (21) de la portion d'entrée de lumière (2) jusqu'à une face inférieure (22) de la portion d'entrée de lumière (2), ces faces supérieure (21) et inférieure (22) étant jointes par la face d'entrée de lumière (20).

8. Guide de lumière (1) selon l'une quelconque des revendications précédentes, dans lequel les rainures (13) s'étendent sur au moins un tiers d'une épaisseur (E) de la portion de sortie de lumière (3), cette épaisseur (E) étant mesurée entre la face de sortie de lumière (30) et une face de réflexion (31) de la portion de sortie de lumière (3) opposée à cette face de sortie de lumière (30).

9. Guide de lumière (1) selon l'une quelconque des revendications précédentes en combinaison avec les revendications 2, 5, 6 et 8, dans lequel les fentes (12) et les rainures (13) délimitent les bandes (10), au moins deux bandes (10) adjacentes étant jointes par au plus un tiers de l'épaisseur (E) de la portion de sortie de lumière (3).

10. Guide de lumière (1) selon l'une quelconque des revendications précédentes, présentant une zone (4) dépourvue de rainures (13) qui s'étend dans un prolongement de la portion de sortie de lumière (3).

11. Guide de lumière (1) selon l'une quelconque des revendications précédentes, dans lequel la face de sortie de lumière (30) est opposée à une face de réflexion (31), cette face de réflexion (31) comprenant une structure de découplage (6).

12. Guide de lumière (1) selon la revendication précédente, dans lequel la structure de découplage (6) comprend au moins une pluralité de prismes (60) et/ou une pluralité de sphères et/ou un grainage et/ou une structure diffractive et/ou de la peinture blanche.

13. Dispositif d'éclairage (7) comprenant une carte de circuit imprimé (70) qui porte une pluralité de sources de lumière (71), et un guide de lumière (1) selon l'une quelconque des revendications précédentes, chacune des faces d'entrée de lumière (20) étant disposée en regard d'au moins une source de lumière (71).

14. Dispositif d'éclairage (7) selon la revendication précédente, dans lequel au moins une des sources de lumière (71) comprend des diodes électroluminescentes RVB.

15. Panneau (8) d'un intérieur de véhicule automobile, comprenant un support (80) et un enjoliveur (81), un dispositif d'éclairage (7) selon l'une quelconque des revendications 13 et 14 étant disposé entre ce support (80) et cet enjoliveur (81), la portion de sortie de lumière (3) du guide de lumière (1) étant disposée en regard de l'enjoliveur (81).

16. Panneau (8) d'un intérieur de véhicule automobile selon la revendication précédente, dans lequel l'enjoliveur (81) présente au moins un motif rendu visible par l'allumage d'au moins une des sources de lumière (71).

## Patentansprüche

1. Lichtleiter (1) zur Beleuchtung eines Fahrzeuginnenraums, umfassend einen Lichteintrittsabschnitt (2) und einen Lichtaustrittsabschnitt (3), wobei der Lichteintrittsabschnitt (2) mindestens zwei Lichteintrittsflächen (20) und der Lichtaustrittsabschnitt (3) mindestens zwei Lichtaustrittsflächen (30) umfasst, wobei dieser Lichtleiter (1) derart ausgebildet ist, dass der Lichteintrittsabschnitt (2) mindestens einen Schlitz (12) aufweist, der zwischen zwei Lichteintrittsflächen (20) angeordnet ist, **dadurch gekennzeichnet, dass** eine Nut (13), die zwei Lichtaustrittsflächen (30) trennt, sich in einer Verlängerung dieses Schlitzes (12) erstreckt, und dadurch, dass innerhalb des Lichteintrittsabschnitts (2) die Lichteintrittsfläche (20) eine obere Fläche (21) und eine untere Fläche (22) verbindet, wobei diese obere Fläche (21) des Lichteintrittsabschnitts (2) ein Mischmittel (5) aufweist, das konfiguriert ist, um Lichtstrahlen zu mischen, die durch die Lichteintrittsfläche (20) eintreten, und dadurch, dass das Mischmittel (5) eine Abfolge von konkaven oder konvexen Stegen (50) umfasst, von außerhalb des Lichtleiters (1) gesehen, die ausgehend von der Lichteintrittsfläche (2) ausgerichtet sind.

2. Lichtleiter (1) nach dem vorhergehenden Anspruch, umfassend eine Abfolge von Bändern (10), wobei jedes Band (10) durch eine Lichteintrittsfläche (20) und mindestens eine Lichtaustrittsfläche (30) begrenzt ist.

3. Lichtleiter (1) nach dem vorhergehenden Anspruch, bei dem sich mindestens ein Band (10) von der Lichteintrittsfläche (20) zur Lichtaustrittsfläche (30) hin erweitert.

4. Lichtleiter (1) nach einem der vorhergehenden Ansprüche, umfassend einen gekrümmten Abschnitt (11) zwischen dem Lichteintrittsabschnitt (2) und dem Lichtaustrittsabschnitt (3).

5. Lichtleiter (1) nach einem der vorhergehenden Ansprüche, umfassend eine Vielzahl von Schlitzen (12), die jeweils zwischen zwei Lichteintrittsflächen (20) angeordnet sind, wobei diese Schlitze (12) in regelmäßigen Abständen entlang einer Hauptlängsrichtung des Lichtleiters (1) angeordnet sind.

6. Lichtleiter (1) nach Anspruch 5, umfassend eine Vielzahl von Nuten (13), die jeweils zwischen zwei Lichtaustrittsflächen (30) angeordnet sind, wobei mindestens mehrere dieser Nuten (13) in regelmäßigen Abständen entlang der Hauptlängsrichtung des Lichtleiters (1) angeordnet sind.

7. Lichtleiter (1) nach einem der vorhergehenden Ansprüche, bei dem mindestens ein Schlitz (12) den Lichteintrittsabschnitt (2) von einer oberen Fläche (21) des Lichteintrittsabschnitts (2) bis zu einer unteren Fläche (22) des Lichteintrittsabschnitts (2) durchdringt, wobei diese oberen (21) und unteren (22) Flächen durch die Lichteintrittsfläche (20) verbunden sind.

8. Lichtleiter (1) nach einem der vorhergehenden Ansprüche, bei dem sich die Nuten (13) über mindestens ein Drittel einer Dicke (E) des Lichtaustrittsabschnitts (3) erstrecken, wobei diese Dicke (E) zwischen der Lichtaustrittsfläche (30) und einer Reflexionsfläche (31) des Lichtaustrittsabschnitts (3), die dieser Lichtaustrittsfläche (30) gegenüberliegt, gemessen wird.

9. Lichtleiter (1) nach einem der vorhergehenden Ansprüche in Kombination mit den Ansprüchen 2, 5, 6 und 8, bei dem die Schlitze (12) und die Nuten (13) die Bänder (10) begrenzen, wobei mindestens zwei benachbarte Bänder (10) durch höchstens ein Drittel der Dicke (E) des Lichtaustrittsabschnitts (3) verbunden sind.

10. Lichtleiter (1) nach einem der vorhergehenden Ansprüche, aufweisend einen Bereich (4) ohne Nuten (13), der sich in einer Verlängerung des Lichtaustrittsabschnitts (3) erstreckt.

11. Lichtleiter (1) nach einem der vorhergehenden Ansprüche, bei dem die Lichtaustrittsfläche (30) einer Reflexionsfläche (31) gegenüberliegt, wobei diese Reflexionsfläche (31) eine Auskopplungsstruktur (6) umfasst.

12. Lichtleiter (1) nach dem vorhergehenden Anspruch, bei dem die Auskopplungsstruktur (6) mindestens eine Vielzahl von Prismen (60) und/oder eine Vielzahl von Kugeln und/oder eine Körnung und/oder eine diffraktive Struktur und/oder weiße Farbe umfasst.

13. Beleuchtungsvorrichtung (7), umfassend eine Leiterplatte (70), die eine Vielzahl von Lichtquellen (71) trägt, und einen Lichtleiter (1) nach einem der vorhergehenden Ansprüche, wobei jede der Lichteintrittsflächen (20) gegenüber mindestens einer Lichtquelle (71) angeordnet ist.

14. Beleuchtungsvorrichtung (7) nach dem vorhergehenden Anspruch, bei dem mindestens eine der Lichtquellen (71) RGB-Leuchtdioden umfasst.

15. Verkleidung (8) eines Fahrzeuginnenraums, umfassend einen Träger (80) und eine Zierblende (81), wobei eine Beleuchtungsvorrichtung (7) nach einem der Ansprüche 13 und 14 zwischen diesem Träger (80) und dieser Zierblende (81) angeordnet ist, wobei der Lichtaustrittsabschnitt (3) des Lichtleiters (1) gegenüber der Zierblende (81) angeordnet ist.

16. Verkleidung (8) eines Fahrzeuginnenraums nach dem vorhergehenden Anspruch, bei dem die Zierblende (81) mindestens ein Muster aufweist, das durch das Einschalten von mindestens einer der Lichtquellen (71) sichtbar gemacht wird.

## Claims

1. Light guide (1) for lighting a passenger compartment of a motor vehicle, comprising a light entry portion (2) and a light exit portion (3), the light entry portion (2) comprising at least two light entry faces (20) and the light exit portion (3) comprising at least two light exit faces (30), this light guide (1) being such that the light entry portion (2) has at least one slot (12) arranged between two light entry faces (20), **characterized in that** a groove (13) separating two light exit faces (30) extends as an extension of this slot (12), and **in that** within the light entry portion (2), the light entry face (20) joins an upper face (21) and a lower face (22), this upper face (21) of the light entry portion (2) having a mixing means (5) configured to mix light rays entering through the light entry face (2) and **in that** the mixing means (5) comprises a succession of concave or convex strips (50), seen from outside the light guide (1), aligned from the light entry face (2).

2. Light guide (1) according to the preceding claim, comprising a succession of bands (10), each band (10) being delimited by a light entry face (20) and at least one light exit face (30).

3. Light guide (1) according to the preceding claim, in which at least one band (10) flares from the light entry face (20) towards the light exit face (30).

4. Light guide (1) according to any one of the preceding claims, comprising a bent portion (11) between the light entry portion (2) and the light exit portion (3).

5. Light guide (1) according to any one of the preceding claims, comprising a plurality of slots (12), each arranged between two light entry faces (20), these slots (12) being arranged at regular intervals according to a main direction of elongation of the light guide (1).

6. Light guide (1) according to claim 5, comprising a plurality of grooves (13), each arranged between two light exit faces (30), at least several of these grooves (13) being arranged at regular intervals according to the main direction of elongation of the light guide (1).

7. Light guide (1) according to any one of the preceding claims, in which at least one slot (12) traverses the light entry portion (2) from an upper face (21) of the light entry portion (2) to a lower face (22) of the light entry portion (2), these upper (21) and lower (22) faces being joined by the light entry face (20).

8. Light guide (1) according to any one of the preceding claims, in which the grooves (13) extend over at least one third of a thickness (E) of the light exit portion (3), this thickness (E) being measured between the light exit face (30) and a reflection face (31) of the light exit portion (3) opposite this light exit face (30).

9. Light guide (1) according to any one of the preceding claims in combination with claims 2, 5, 6 and 8, in which the slots (12) and the grooves (13) delimit the bands (10), at least two adjacent bands (10) being joined by at most one third of the thickness (E) of the light exit portion (3).

10. Light guide (1) according to any one of the preceding claims, having an area (4) devoid of grooves (13) which extends as an extension of the light exit portion (3).

11. Light guide (1) according to any one of the preceding claims, in which the light exit face (30) is opposite a reflection face (31), this reflection face (31) comprising a decoupling structure (6).

12. Light guide (1) according to the preceding claim, in which the decoupling structure (6) comprises at least a plurality of prisms (60) and/or a plurality of spheres and/or graining and/or a diffractive structure and/or white paint.

13. Lighting device (7) comprising a printed circuit board (70) which carries a plurality of light sources (71), and a light guide (1) according to any one of the preceding claims, each of the light entry faces (20) being arranged facing at least one light source (71).

14. Lighting device (7) according to the preceding claim, in which at least one of the light sources (71) comprises RGB light-emitting diodes.

15. Panel (8) of a motor vehicle interior, comprising a support (80) and a trim (81), a lighting device (7) according to any one of claims 13 and 14 being arranged between this support (80) and this trim (81), the light exit portion (3) of the light guide (1) being arranged facing the trim (81).

16. Panel (8) of a motor vehicle interior according to the preceding claim, in which the trim (81) has at least one pattern made visible by the illumination of at least one of the light sources (71).
